# EUROPÄISCHE PATENTSCHRIFT

(11) **EP 0 820 391 B1**
(45) Veröffentlichungstag und Bekanntmachung des Hinweises auf die Patenterteilung: **04.07.2001**
(21) Anmeldenummer: 96908012.6
(22) Anmeldetag: 04.04.1996
(51) Int. Cl.: B60R 21/32, B60R 22/46, G01P 21/00, G01R 31/00

(54) **ANORDNUNG ZUR AUSLÖSUNG EINER PERSONENSCHUTZANLAGE**
ARRANGEMENT FOR TRIGGERING A PERSONAL PROTECTION SYSTEM
DISPOSITIF DE DECLENCHEMENT D'UN SYSTEME DE PROTECTION DE PERSONNES

(30) Priorität: 13.04.1995 DE 19514082
(43) Veröffentlichungstag der Anmeldung: 28.01.1998
(73) Patentinhaber: SIEMENS AKTIENGESELLSCHAFT, 80333 München (DE)
(72) Erfinder: SWART, Marten, D-93083 Obertraubling (DE); MADER, Gerhard, D-93107 Thalmassing (DE)
(86) Internationale Anmeldenummer: DE9600599
(87) Internationale Veröffentlichungsnummer: WO9632302

(56) Entgegenhaltungen:
- EP-A- 0 011 680
- EP-A- 0 396 265
- EP-A- 0 410 108
- EP-A- 0 518 501
- EP-A- 0 567 938
- WO-A-89/09147
- DE-A- 3 805 161
- DE-A- 4 209 140
- DE-U- 9 001 803
- US-A- 5 085 464

## Beschreibung

Die Erfindung betrifft eine Anordnung zur Auslösung einer Personenschutzanlage gemäß Oberbegriff von Anspruch 1. Unter Personenschutzanlage ist dabei z.B. eine Airbaganlage und/oder ein Gurtstrammer zu verstehen.

Zur Sicherung gegen Fehlauslösungen solcher Personenschutzanlagen ist es üblich, die Auslösung nicht nur von dem Ansprechsignal eines Beschleunigungssensors abhängig zu machen; zusätzlich ist ein Freigabesignal einer Schutzeinrichtung erforderlich, die meist ein beschleunigungsabhängig wirkender mechanischer Schalter (Safing-Sensor) ist. So ist entsprechend den Merkmalen des Oberbegriffs des Anspruchs 1 aus der DE 90 01 803 U1 eine Anordnung mit zwei mechanischen Crashsensoren als Schutzeinrichtung und einem elektronischen Beschleunigungssensor bekannt. Jeder Sensor wird zur Durchführung eines Funktionstests mittels steuerbarer Schalttransistoren vom Rest der Schaltung abgetrennt, was einen großen Aufwand an Steuer- und Schaltmitteln erfordert.

In der US 5 085 464 wird ein beschleunigungsabhängig wirkender mechanischer Schalter vorgeschlagen, bei dem eine weichmagnetische seismische Masse mit einem Schaltarm des Schalters verbunden ist. Die seismische Masse wird von einer Spule umgeben. Fließt Strom durch die Spule, wird der Schalter durch die auf die seismische Masse wirkende magnetische Kraft - je nach Stromflußrichtung in der Spule - in offenem oder geschlossenem Zustand gehalten. Ein solcher beschleunigungsabhängig wirkender Schalter hat jedoch wegen seiner aufwendigen Konstruktion und wegen seiner großen elektromagnetischen Abstrahlung, die wiederum auf einen elektronischen Beschleunigungssensor einer Personenschutzanlage einwirken kann, keinen Eingang in die Praxis gefunden.

Aus der DE 38 05 161 A1 ist eine Beschleunigungssensoreinrichtung mit mehreren beschleunigungsabhängig wirkenden Schaltern mit unterschiedlicher Ansprechschwellle bekannt, bei der die einzelnen Schalter auf einem gemeinsamen Substrat angeordnet sind.

Der Erfindung liegt die Aufgabe zugrunde, eine Schutzeinrichtung mit einfachem Aufbau anzugeben, die auch nach Einbau in ein Fahrzeug testbar ist und bei deren Test eine Fehlauslösung der Personenschutzanlage verhindert wird.

Diese Aufgabe wird erfindungsgemäß durch die Merkmale des Anspruchs 1 gelöst. Zu diesem Zweck ist erfindungsgemäß eine Schutzeinrichtung mit zwei Schalteinheiten vorgesehen, die das Freigabesignal nur liefert, wenn beide Schalteinheiten gleichzeitig während eines Mindestintervalls schließen. Die genannte Schießbedingung (UND-Bedingung) kann im einfachsten Fall durch Reihenschaltung der Schalteinheiten oder durch entsprechende Verknüpfung von Schließsignalen, die von den Schalteinheiten abgeleitet sind, überwacht/abgefragt werden. Die Schalteinheiten sind testbar. Weiterhin sind Verriegelungsmittel vorgesehen, durch die die jeweils nicht getestete Schalteinheit durch das Testsignal für die andere Schalteinheit verriegelbar ist. Dadurch wird es möglich, jede der Schalteinheiten ohne Risiko einer Fehlauslösung der Personenschutzanlage durch Schließen jeweils einer der Schalteinheiten zu testen.

Vorzugsweise werden die Schalteinheiten als mikromechanische Strukturen realisiert wie sie beispielsweise in EP 0 567 938 A1 beschrieben sind. Dabei ist es besonders zweckmäßig, beide Schalteinheiten auf demselben Substrat anzuordnen, das zusätzlich auch noch den Beschleunigungssensor enthalten kann.

Weitere bevorzugte Ausgestaltungen der Erfindung sind in den Unteransprüchen erhalten.

Die Erfindung wird anhand der Figuren näher erläutert; es zeigen :
- Figur 1: ein Blockschaltbild einer Anordnung zur Auslösung einer Personenschutzanlage und
- Figur 2: ein Ausführungsbeispiel für die Schutzeinrichtung.

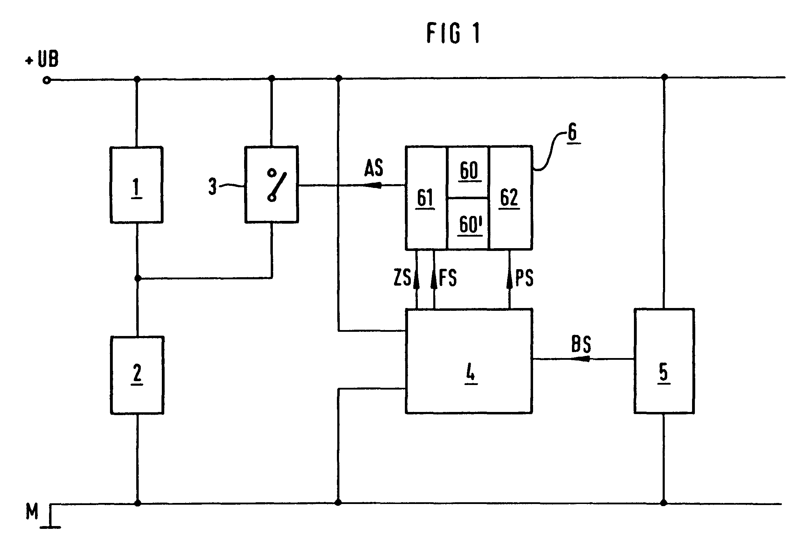

Gemäß Figur 1 ist eine Personenschutzanlage 1 in Reihenschaltung mit einer Zündpille 2 zwischen den Klemmen UB/M einer Spannungsquelle angeschlossen. An dieser liegt die Zündpille auch über einen Auslöseschalter 3, der durch ein Auslösesignal AS einer Schutzeinrichtung 6 ansteuerbar ist. Wenn dieser Auslöseschalter 3 durch das Auslösesignal AS geschlossen wird, "schaltet" die Zündpille 2 durch und löst damit die Personenschutzanlage 1 aus.

Die Auslösung ist abhängig vom Ansprechsignal BS eines Beschleunigungssensors 5, das in einer Steuereinheit 4 - in der Regel ein Mikroprozessor - ausgewertet wird. Diese liefert ggf. das Freigabesignal FS an einen Auswerter 61 in der Schutzeinrichtung 6. Diese enthält zwei Schalteinheiten 60, 60', die jeweils ein Schließsignal abgeben, wenn die Beschleunigung einen Grenzwert überschreitet. Diese Schließsignale werden durch den Auswerter 61 erfaßt, der bei einer Mindestüberlappung dieser Schließsignale und bei Vorliegen des Freigabesignals FS das Auslösesignal AS abgibt.

Ferner enthält die Schutzeinrichtung 6 eine Testeinrichtung 62, durch die die beiden Schalteinheiten 60, 60' abhängig von einem Prüfsignal PS der Steuereinheit 4 abwechselnd getestet werden können.

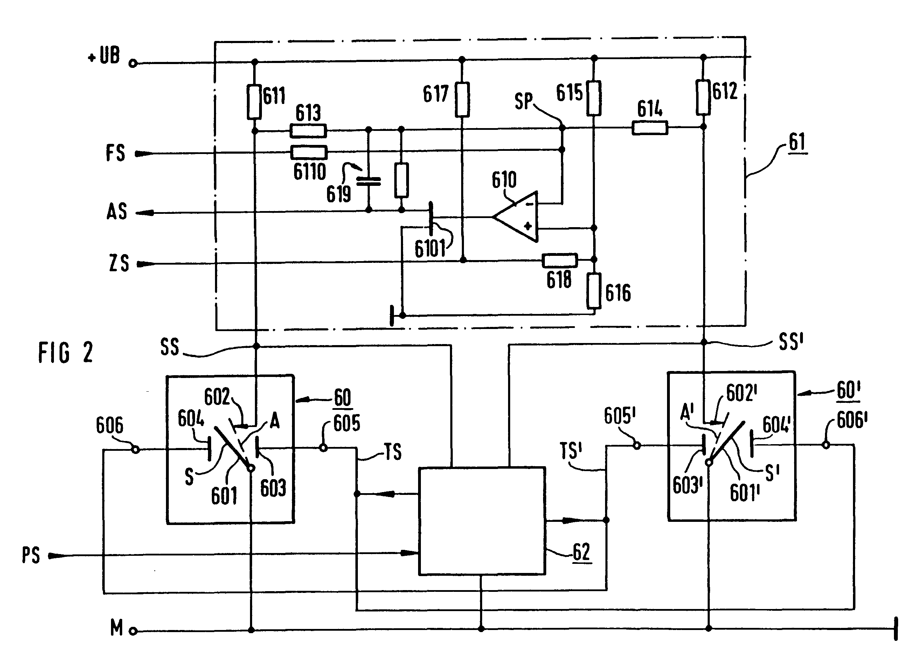

In Figur 2 sind die mikromechanischen Schalteinheiten 60, 60' schematisch dargestellt: Danach enthält jede Schalteinheit einen Schaltarm 601, 601', der mit einer Festelektrode 602, 602' zusammenwirkt und von einer Sperrposition S in eine gestrichelt gezeichnete Ansprechposition A steuerbar ist. Dazu dienen eine Testelektrode 603, 603' auf der einen Seite des Schaltarms und eine Sperrelektrode 604, 604' auf der gegenüberliegenden Seite des Schaltarms. Jede Testelektrode ist mit einem zugehörigen Testeingang 605, 605' und jede Sperrelektrode mit einem Sperreingang 606, 606' verbunden. Wird zwischen einem Testeingang und Masse ein Testsignal TS, TS' angelegt, so wird der Schaltarm durch das dadurch entstehende elektrische Feld in die Ansprechposition A gezogen und das dabei auftretende Schließsignal SS, SS' durch den Auswerter 62 in der Schutzeinrichtung 6 erfaßt und ausgewertet.

Gemäß Figur 2 ist der Testeingang 605, der Schalteinrichtung 60 mit dem Sperreingang 606' der Schalteinrichtung 60' und deren Testeingang 605' mit dem Sperreingang 606 der Schalteinheit 60 verbunden: Wenn daher Testsignal TS am Testeingang 605 liegt und den Schaltarm 601 der Schalteinheit 60 in die Ansprechposition bewegt, wird gleichzeitig der Schaltarm 601' der anderen Schalteinheit 60' in die gezeichnete Sperrposition S' gezogen bzw. in dieser gehalten. Damit ist ein fehlerhaftes gleichzeitiges Ansprechen beider Schalteinheiten ausgeschlossen.

Der Auswerter 61 ist im wesentlichen ein UND-Gatter, das das Auslösesignal AS liefert, sobald alle Eingangsbedingungen erfüllt sind, nämlich die Schließsignale SS, SS' gleichzeitig mit dem Freigabesignal FS und einem Zusatzsignal ZS von der Steuereinheit 4 vorliegen. Zu diesem Zweck sind die Festelektroden 602, 602' über je einen Widerstand 611, 612 an UB und über Widerstände 613 und 614 an einen Sternpunkt SP angeschlossen, der über einen weiteren Widerstand 6110 mit der Steuereinheit 4 verbunden ist, die auf diesem Weg als Freigabesignal FS Low-Potential anlegt. Der Sternpunkt SP kann aber Low-Potential nur dann annehmen, wenn zusätzlich beide Schalteinheiten 60, 60' geschlossen sind. In diesem Fall sinkt das Potential am Invertiereingang eines Operationsverstärkers 610 unter das des nichtinvertierenden Einganges, das durch einen Spannungsteiler 615, 616 bestimmt ist. Infolgedessen geht der Ausgang von 610 auf high und der Transistor 6101 wird durchgesteuert, so daß das Auslösesignal AS (Massepotential) abgegeben wird. Dieses hat eine Mindestdauer, die unabhängig von der Schließdauer der Schalteinheiten ist und die durch die Zeitkonstante des RC-Gliedes 619 und die durch Widerstand 618 festgelegte Hysterese des Operationsverstärkers 610 bestimmt ist: Durch die Aufladung des Kondensators des RC-Gliedes 619 nach dem Öffnen beider Schalteinheiten vergeht eine Mindestzeit, bis die Rückschaltschwelle des Operationsverstärkers 610 erreicht ist.

Das Zusatzsignal ZS ist in diesem Fall an dem Ausgang des Operationsverstärkers 610 wirksam und ermöglicht die beschriebene Funktion nur dann, wenn es High-Wert hat; eine Auslösung kann also grundsätzlich durch einen Low-Wert des Zusatzsignals (z.B. wenn bei einem Test ein Fehler festgestellt wurde) verhindert werden.

Bei der bisherigen Beschreibung wurde stets von einem Schließen der Schaltarme der Schalteinheiten gesprochen. Diese Terminologie soll aber auch eine Ausführungsform einschließen, bei der ein "Schließsignal" erzeugt wird, wenn der Schaltarm einen Mindestabstand von der Festelektrode unterschreitet. Bei einer solchen Ausführungsform kann man beispielsweise die Änderung der Kapazität zwischen Festelektrode und Schaltarm überwachen.

Das Testen der Schalteinheiten kann bei Aktivierung der Anordnung erfolgen. Die Schalteinheiten können aber auch während Betrieb der Anordnung, also während Fahrbetrieb, getestet werden. Um bei einem während des Testbetriebs auftretenden Unfalls dennoch die Personenschutzanlage auslösen zu können, kann der Testbetrieb unterbrochen werden. Dies erfolgt beispielsweise dann, wenn der Beschleunigungssensor während des Testbetriebs eine einen Schwellwert überschreitende Beschleunigung erkennt.

## Patentansprüche

1. Anordnung zur Auslösung einer Personenschutzanlage (1) durch ein Auslösesignal (AS) abhängig vom Ansprechsignal (BS) eines Beschleunigungssensors (5) und dem Freigabesignal einer Schutzeinrichtung (6), welche zwei Schalteinheiten (60; 60') aufweist, von denen jede eine Festelektrode (602; 602') und einen mit dieser zusammmenwirkenden Schaltarm (601; 601') aufweist und beschleunigungsabhängig ein Schließsignal (SS; SS') liefert, und welche ein Freigabesignal abgibt, sobald beide Schalteinheiten (60; 60') gleichzeitig schließen, wobei den Schalteinheiten (60; 60') eine Testeinrichtung (62) zugeordnet ist, durch die der Schaltarm (601; 601') jeder Schalteinheit (60; 60') abhängig von einem zugeordneten elektrischen Testsignal (TS; TS') in seine Ansprechposition (A) steuerbar ist, **dadurch gekennzeichnet,** daß jeder Schalteinheit (60; 60') Verriegelungsmittel
zugeordnet sind, durch die jede Schalteinheit (60; 60') abhängig von einem elektrischen Sperrsignal im offenen Zustand sperrbar ist, daß jede Schalteinheit (60; 60') einen Testeingang (605; 605') und einen Sperreingang (606; 606') hat, und daß diese Eingänge so miteinander gekoppelt sind, daß durch das Anlegen des Testsignals (TS; TS') an eine der Schalteinheiten (60; 60') die jeweils andere gesperrt wird.

2. Anordnung nach Anspruch 1, dadurch gekennzeichnet, daß der Testeingang (605; 605') jeder Schalteinheit (60; 60') mit dem Sperreingang (606; 606') der anderen Schalteinheit (60; 60') verbunden ist und beide mit demselben Testsignal (TS; TS') angesteuert werden.

3. Anordnung nach Anspruch 1 oder 2, dadurch gekennzeichnet, daß jede Schalteinheit (60; 60') eine mikromechanische Struktur ist.

4. Anordnung nach Anspruch 3, dadurch gekennzeichnet, daß jedem Schaltarm (601; 601') eine Testelektrode (603; 603') so zugeordnet ist, daß er durch Anlegen des Testsignals (TS; TS') an den mit der Testelektrode (603; 603') verbundenen Testeingang (605; 605') in seine Ansprechposition (A) steuerbar ist.

5. Anordnung nach Anspruch 4, dadurch gekennzeichnet, daß auf der der Testelektrode (603; 603') gegenüberliegenden Seite des Schaltarms (601; 601') eine Sperrelektrode (604; 604') angeordnet ist, die mit dem Sperreingang (606; 606') verbunden ist.

6. Anordnung nach Anspruch 5, dadurch gekennzeichnet, daß beide Schalteinheiten (60; 60') auf demselben Substrat angeordnet sind und der Testeingang (605; 605') jeder Schalteinheit (60; 60') jeweils mit der Testelektrode (603; 603') dieser Schalteinheit (60; 60') und mit der Sperrelektrode (604; 604') der anderen Schalteinheit (60; 60') verbunden ist.

7. Anordnung nach Anspruch 6, dadurch gekennzeichnet, daß der zugehörige Beschleunigungssensor (5) ebenfalls als mikromechanische Struktur auf demselben Substrat ausgebildet ist.

8. Anordnung nach Anspruch 1, dadurch gekennzeichnet, daß ein Auswerter (61) die Schließsignale (SS; SS') der Schalteinheiten (60; 60') verknüpft und Mittel zur Verlängerung des Auslösesignals (AS) auf einen Mindestwert enthält.

9. Anordnung nach Anspruch 8, dadurch gekennzeichnet, daß die Schaltungspunkte, an denen die zu verknüpfenden Signale (SS; SS'; FS)auftreten, über Entkopplungswiderstände (613; 614; 6110) mit einem Sternpunkt (SP) verbunden sind, daß der Ausgang für das Auslösesignal (AS) über ein RC-Glied (619) mit dem Sternpunkt (SP) und über einen Transistor (6101) mit Masse (M) verbunden ist, und daß ein Operationsverstärker (610) mit Hysterese den Transistor (6101) durchsteuert, wenn das Potential des Sternpunktes (SP) unter einen Referenzwert sinkt.

## Claims

1. Arrangement for triggering a personal protection system (1) by means of a trigger signal (AS) as a function of the response signal (BS) of an acceleration sensor (5) and the release signal of a protection device (6) which has two switching units (60; 60'), each of which has a solid electrode (602; 602') and a switching arm (601; 601'), interacting with the latter, and supplies a closing signal (SS; SS') as a function of the acceleration, and the said protection device (6) outputs a release signal as soon as both switching units (60; 60') close simultaneously, the switching units (60; 60') being assigned a test device (62), by means of which the switching arm (601; 601') of each switching unit (60; 60') can be adjusted to its response position (A) as a function of an assigned electrical test signal (TS; TS'), characterized in that each switching unit (60; 60') is assigned locking means, by means of which each switching unit (60; 60') can be locked in the open state as a function of an electrical lock-out signal, in that each switching unit (60; 60') has a test input (605; 605') and a lock-out input (606; 606'), and in that these inputs are coupled to one another in such a way that the application of the test signal (TS; TS') to one of the switching units (60; 60') locks out the respective other switching unit.

2. Arrangement according to Claim 1, characterized in that the test input (605; 605') of each switching unit (60; 60') is connected to the lock-out input (606; 606') of the other switching unit (60; 60') and both are driven with the same test signal (TS; TS').

3. Arrangement according to Claim 1 or 2, characterized in that each switching unit (60; 60') is a micromechanical structure.

4. Arrangement according to Claim 3, characterized in that each switching arm (601; 601') is assigned a test electrode (603; 603') in such a way that it can be adjusted to its response position (A) by applying the test signal (TS; TS') to the test input (605; 605') connected to the test electrode (603; 603').

5. Arrangement according to Claim 4, characterized in that a lock-out electrode (604; 604'), which is connected to the lock-out input (606; 606'), is arranged on that side of the switching arm (601; 601') which is located opposite the test electrode (603; 603').

6. Arrangement according to Claim 5, characterized in that both switching units (60; 60') are arranged on the same substrate, and the test input (605; 605') of each switching unit (60; 60') is connected in each case to the test electrode (603; 603') of this switching unit (60; 60') and to the lock-out electrode (604; 604') of the other switching unit (60; 60').

7. Arrangement according to Claim 6, characterized in that the associated acceleration sensor (5) is also implemented as a micromechanical structure on the same substrate.

8. Arrangement according to Claim 1, characterized in that an evaluator (61) logically connects the closing signals (33; SS') of the switching units (60; 60') and contains means for prolonging the trigger signal (AS) to a minimum value.

9. Arrangement according to Claim 6, characterized in that the circuit points at which the signals (SS; SS'; FS) to be logically connected occur are connected to a neutral point (SP) via isolating resistors (613; 614; 6110), in that the output for the trigger signal (AS) is connected to the neutral point (SP) via an RC element (619), and to earth (M) via a transistor (6101), and in that an operational amplifier (610) activates the transistor (6101) with hysteresis if the potential of the neutral point (SP) drops below a reference value.

## Revendications

1. Dispositif pour déclencher une installation (1) de protection de personnes par un signal (AS) de déclenchement en fonction du signal (BS) de réponse d'un capteur (5) d'accélération et du signal de libération d'un dispositif (6) de protection qui comporte deux unités (60 ; 60') de commutation dont chacune comporte une électrode (602 ; 602') fixe et un bras (601 ; 601') de connexion coopérant avec cette dernière et fournit un signal (SS ; SS') de fermeture en fonction de l'accélération, et qui fournit un signal de libération dès que les deux unités (60 ; 60') de commutation ferment en même temps, un dispositif (62) de test, par lequel le bras (601 ; 601') de connexion de chaque unité (60 ; 60') de commutation peut être commandée à sa position
(A) de réponse en fonction d'un signal (TS ; TS') de test électrique associé, étant associé aux unités (60 ; 60') de commutation, caractérisé en ce qu'il est associé à chaque unité (60 ; 60') de commutation des moyens de verrouillage par lesquels chaque unité (60 ; 60') de commutation peut être bloquée en fonction d'un signal électrique de blocage à l'état ouvert, en ce que chaque unité (60 ; 60') de commutation a une entrée (605 ; 605') de test et une entrée (606 ; 606') de blocage, et en ce que ces deux entrées sont couplées l'une à l'autre de telle manière que, par l'application du signal (TS ; TS') de test à l'une des unités (60 ; 60') de commutation, l'autre unité est bloquée.

2. Dispositif suivant la revendication 1, caractérisé en ce que l'entrée (605 ; 605') de test de chaque unité (60 ; 60') de commutation est reliée à l'entrée (606 ; 606') de blocage de l'autre unité (60 ; 60') de commutation et en ce que les deux sont commandées par le même signal (TS ; TS') de test.

3. Dispositif suivant la revendication 1 ou 2, caractérisé en ce que chaque unité (60 ; 60') de commutation est une structure micromécanique.

4. Dispositif suivant la revendication 3, caractérisé en ce qu'il est associé à chaque bras (601 ; 601') de connexion une électrode (603 ; 603') de test, de telle manière que, par l'application du signal (TS ; TS') de test à l'entrée (605 ; 605') de test reliée à l'électrode (603 ; 603') de test, le bras de connexion peut être commandé à sa position (A) de réponse.

5. Dispositif suivant la revendication 4, caractérisé en ce qu'il est monté du côté du bras (601 ; 601') de connexion faisant face à l'électrode (603 ; 603') de test une électrode (604 ; 604') de blocage qui est reliée à l'entrée (606 ; 606') de blocage.

6. Dispositif suivant la revendication 5, caractérisé en ce que les deux unités (60 ; 60') de commutation sont montées sur le même substrat et en ce que l'entrée (605 ; 605') de test de chaque unité (60 ; 60') de commutation est reliée chaque fois à l'électrode (603 ; 603') de test de cette unité (60 ; 60') de commutation et à l'électrode (604 ; 604') de blocage de l'autre unité (60 ; 60') de commutation.

7. Dispositif suivant la revendication 6, caractérisé en ce que le capteur (5) d'accélération associé est réalisé également en structure micromécanique sur le même substrat.

8. Dispositif suivant la revendication 1, caractérisé en ce qu'un dispositif (61) d'exploitation combine les signaux (SS ; SS') de fermeture des unités (60 ; 60') de commutation et contient des moyens pour étendre le signal (AS) de déclenchement à une valeur minimum.

9. Dispositif suivant la revendication 8, caractérisé en ce que les points du circuit auxquels les signaux (SS ; SS' ; FS) à combiner apparaissent sont reliés par l'intermédiaire de résistances (613 ; 614 ; 6110) de découplage à un point (SP) en étoile, en ce que la sortie pour le signal (AS) de déclenchement est reliée par l'intermédiaire d'un élément (619) RC au point (SP) en étoile et par l'intermédiaire d'un transistor (6101) à la masse (M), et en ce qu'un amplificateur (610) opérationnel interconnecte par hystérésis le transistor (6101) si le potentiel du point (SP) en étoile s'abaisse en-dessous d'une valeur de référence.
